# FASCICULE DE BREVET EUROPEEN

(11) **EP 3 133 933 B1**
(45) Date de publication et mention de la délivrance du brevet: **12.07.2023**
(21) Numéro de dépôt: 15717565.4
(22) Date de dépôt: 26.03.2015
(51) Int. Cl.: A23J 3/14, A23J 3/10, A23C 9/13, A23C 20/00, A23C 19/093, A23C 19/08, A23C 23/00, A23G 1/44, A23J 3/08, A23L 9/10, A23L 33/185, A23L 33/19, A23L 23/10, A23C 9/154, A23C 19/028, A23C 19/055, A23C 19/076

(54) **ASSEMBLAGE D'AU MOINS UNE PROTÉINE VÉGÉTALE ET D'AU MOINS UNE PROTÉINE LAITIÈRE, SA PRÉPARATION ET SES UTILISATIONS**
ANORDNUNG AUS MINDESTENS EINEM PFLANZENPROTEIN UND MINDESTENS EINEM MILCHPROTEIN, HERSTELLUNG DAVON UND VERWENDUNGEN DAVON
ASSEMBLY OF AT LEAST ONE PLANT PROTEIN AND AT LEAST ONE MILK PROTEIN, PRODUCTION THEREOF AND USES OF SAME

(30) Priorité: 26.03.2014 FR 1452608
(43) Date de publication de la demande: 01.03.2017
(73) Titulaire: Roquette Frères, 62136 Lestrem (FR); Ingredia, 62000 Arras (FR)
(72) Inventeur: NONO, Merveille, F-62400 Béthune (FR); MORETTI, Emmanuelle, F-59000 Lille (FR); SNAPPE, Jean-Jacques, F-62149 Festubert (FR); COLIN, Isabelle, F-62223 Anzin Saint Aubin (FR)
(74) Mandataire: Plasseraud IP
(86) Numéro de dépôt international: PCT/FR2015/050780
(87) Numéro de publication internationale: WO 2015/145082

(56) Documents cités:
- EP-A1- 0 663 797
- EP-A1- 2 272 379
- EP-B1- 0 663 797
- WO-A1-2014/011029
- US-A- 3 873 751
- US-A- 4 279 939
- US-A- 4 378 376
- US-A- 5 514 655

## Description

### DOMAINE DE L'INVENTION

La présente invention a pour objet un nouveau procédé de fabrication d'un assemblage d'au moins une protéine laitière et d'au moins une protéine végétale dans différentes compositions ou matrices alimentaires. Il a également pour objet l'assemblage d'au moins une protéine laitière et d'au moins une protéine végétale ainsi obtenu ainsi que l'utilisation de cet assemblage.

### ARRIERE-PLAN TECHNOLOGIQUE

Avec les glucides et les lipides, les protéines constituent une partie importante de notre alimentation. Les protéines consommées proviennent généralement soit d'une origine animale (viandes, poissons, oeufs, produits laitiers...), soit d'une origine végétale (céréales, légumineuses...).

Leur rôle nutritionnel est de fournir des acides aminés et de l'énergie, substrats nécessaires à la synthèse des protéines de l'organisme.

Les protéines se composent d'un enchaînement d'acides aminés. Il existe 20 acides aminés dont 9 sont indispensables à l'homme, car l'organisme ne sait pas les synthétiser et ils doivent donc être apportés par l'alimentation.

Dans l'approche traditionnelle, la qualité des protéines est évaluée à partir de leur teneur en acides aminés indispensables. Il est notamment connu qu'en règle générale les protéines d'origine animale sont plus riches en certains acides aminés indispensables que les protéines végétales.

Les protéines de lait présentent un intérêt nutritionnel intéressant ; par contre leur coût est élevé et peut être un frein à leur utilisation. Les industriels cherchent donc des protéines de substitution ; et les protéines végétales sont des protéines de substitution attractives. De nombreuses demandes de brevet décrivent déjà l'utilisation de protéines végétales pour remplacer tout ou partie des protéines d'origine animale dans des aliments. Toutefois, les protéines de substitution actuellement disponibles sur le marché ne possèdent pas nécessairement des propriétés fonctionnellement optimales et intéressantes, équivalentes aux propriétés fonctionnelles des ingrédients protéiques fonctionnelles d'origine animale.

Par exemple, le document EP 0522800 décrit un procédé de traitement d'un concentré de protéines végétales permettant d'en améliorer sa fonctionnalité à lier la graisse et l'eau, ainsi que son application en remplacement des protéines animales dans la fabrication de saucisses.

Dans le document EP 0238946, il est décrit un isolat de protéines amélioré provenant de graines d'un légume à grains à teneur en lipides relativement basse, son procédé de préparation ainsi que son utilisation en tant qu'additif dans la fabrication de saucisses et cervelas.

Le document US 3873751 décrit un mélange de lactosérum doux et de protéine végétale, ladite protéine végétale étant une protéine de soja.

Le document WO2014/011020 décrit un mélange de caséine et d'une protéine anticoagulante.

Les protéines jouent un rôle important sur la qualité organoleptique de nombreux aliments frais ou manufacturés, comme par exemple la consistance et la texture de la viande et produits à base de viande, du lait et dérivés, des pâtes et du pain. Ces qualités des aliments dépendent très fréquemment de la structure, des propriétés physico-chimiques et des propriétés fonctionnelles des composants protéiques des aliments.

Le terme « propriétés fonctionnelles » des ingrédients alimentaires signifie dans la présente demande toute propriété non nutritionnelle qui influence l'utilité d'un ingrédient dans un aliment. Ces diverses propriétés contribuent à l'obtention des caractéristiques finales désirées de l'aliment. Quelques-unes de ces propriétés fonctionnelles sont la solubilité, l'hydratation, la viscosité, la coagulation, la stabilisation, la texturation, la formation de pâte, les propriétés moussantes, les capacités émulsifiantes et gélifiantes. Les protéines jouent également un rôle important dans les propriétés sensorielles des matrices alimentaires dans lesquelles elles sont utilisées, et il existe une réelle synergie entre les propriétés fonctionnelles et les propriétés sensorielles.

Les propriétés fonctionnelles des protéines ou fonctionnalité sont donc les propriétés physiques ou physico-chimiques qui ont une incidence sur les qualités sensorielles des systèmes alimentaires générées au cours des transformations technologiques, de la conservation ou des préparations culinaires domestiques.

On constate quel que soit l'origine de la protéine qu'elle intervient sur la couleur, la flaveur et/ou la texture d'un produit. Ces caractéristiques organoleptiques interviennent de façon déterminante dans le choix du consommateur et elles sont dans ce cas largement prises en compte par les industriels.

La fonctionnalité des protéines est le résultat d'interactions moléculaires de ces dernières avec leur environnement (autres molécules, pH, température...). Ces propriétés sont généralement classées en 3 groupes :
- propriétés d'hydratation qui regroupent les interactions de la protéine avec l'eau : cela recouvre les propriétés d'absorption, de rétention, de mouillabilité, de gonflement, d'adhérence, de dispersion, de viscosité....
- propriétés de structuration qui regroupent les propriétés d'interaction Protéine-Protéine : cela recouvre les phénomènes de précipitation, de coagulation, de gélification....
- propriétés de surface qui regroupent les propriétés d'interaction des protéines avec d'autres structures polaires ou apolaires en phase liquide ou gazeuse : cela recouvre les propriétés émulsifiantes, moussantes...

Ces différentes propriétés ne sont pas indépendantes les unes des autres car une propriété fonctionnelle peut résulter de plusieurs types d'interactions ou de plusieurs propriétés fonctionnelles.

Les Sociétés Demanderesses ont constaté qu'il existait un réel besoin, non satisfait, de disposer d'une composition possédant des propriétés fonctionnelles intéressantes, pouvant être employée dans l'alimentation comme un substitut au moins partiel des protéines d'origine animale.

Outre cet aspect lié à la fonctionnalité de la composition protéique, les Sociétés Demanderesses ont également constaté qu'il existait un besoin de disposer de compositions protéiques à visée nutritionnelle et pouvant être utilisées dans des applications où des besoins en terme de profil nutritionnel étaient recherchés et souhaités. La présente invention permet également de répondre à ces objectifs. Ainsi les Sociétés Demanderesses se sont également attelées à cette recherche afin de pouvoir répondre aux demandes croissantes des industriels et des consommateurs pour des compositions possédant des propriétés nutritionnelles intéressantes sans pour autant présenter les inconvénients de certaines compositions déjà existants.

Dans ce contexte, les Sociétés Demanderesses ont réalisés des travaux de recherche portant sur la préparation de nouveaux assemblages d'au moins une protéine laitière et d'au moins une protéine végétale et leurs utilisations dans différentes compositions alimentaires.

### DESCRIPTION DE L'INVENTION

La présente invention a pour objet un procédé de préparation d'un assemblage d'au moins un rétentat de caséines micellaires et d'au moins une protéine de pois, ledit procédé comprenant les étapes consistant à :
- préparer une composition aqueuse comprenant au moins une protéine de pois par incorporation de ladite au moins une protéine de pois dans de l'eau,
- abaisser le pH de ladite composition aqueuse à une valeur inférieure ou égale à 4,5 pour obtenir une aqueuse acidifiée ;
- remonter le pH de ladite composition aqueuse acidifiée à une valeur comprise entre 5 et 8, de préférence entre 5,5 et 7,5, plus préférentiellement encore jusqu'à une valeur comprise entre 6 et 7, et idéalement à une valeur de 7,
- introduire le rétentat de caséines micellaires dans ladite composition aqueuse obtenue après remontée du pH pour obtenir un mélange ;
- homogénéiser le mélange obtenu.

Communément, on appelle assemblage de protéines la réunion de plusieurs protéines formant ensemble une structure tridimensionnelle particulière.

En effet, les protéines sont formées d'une succession d'acides aminés. La partie radicale des acides aminés porte des fonctions chimiques différentes. Ainsi, il peut y avoir des interactions entre les radicaux des acides aminés, typiquement des interactions hydrophobes, des liaisons hydrogènes, des liaisons ioniques et des ponts disulfures. Les interactions entre radicaux ont pour effet de provoquer le repliement des protéines sur elles-mêmes et entre elles pour adopter une structure supramoléculaire tridimensionnelle. En cela, l'assemblage de protéines se distingue du simple mélange : les protéines ne sont pas simplement mélangées physiquement, mais forment ensemble une nouvelle structure, ayant par exemple une taille, une morphologie et une composition particulière. Dans la présente description, le terme « protéine végétale » désigne toutes les protéines issues des céréales, des oléagineux, des légumineuses et des tubercules, ainsi que toutes les protéines issues des algues et des microalgues, utilisée seule ou en mélange, choisie dans la même famille ou dans des familles différentes.

Ces protéines végétales peuvent être utilisées seules ou en mélanges entre elles, choisies dans la même famille ou dans des familles différentes.

Par « légumineuses », on entend au sens de la présente invention toutes plantes appartenant aux familles des césalpiniacées, des mimosacées ou des papilionacées et notamment toutes plantes appartenant à la famille des papilionacées comme, par exemple, le pois, le haricot, la fève, la fèverole, la lentille, la luzerne, le trèfle ou le lupin.

Cette définition inclut notamment toutes les plantes décrites dans l'un quelconque des tableaux contenus dans l'article de R. HOOVER et al., 1991 (HOOVER R. (1991) « Composition, structure, functionality and chemical modification of legume starches : a review » Can. J. Physiol. Pharmacol., 69 pp. 79-92).

Selon la présente invention, ladite protéine de légumineuse est une protéine de pois.

Le terme « pois » étant ici considéré dans son acception la plus large et incluant en particulier :
- toutes les variétés de « pois lisse » (« *smooth pea* ») et « de pois ridés » (« *wrinkled pea* »), et
- toutes les variétés mutantes de « pois lisse » et de « pois ridé » et ce, quelles que soient les utilisations auxquelles on destine généralement lesdites variétés (alimentation humaine, nutrition animale et/ou autres utilisations).

Le terme « pois » dans la présente demande inclut les variétés de pois appartenant au genre *Pisum* et plus particulièrement aux espèces *sativum* et *aestivum.*

Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87.

De manière encore plus préférentielle, ladite protéine de légumineuse est issue du pois lisse.

En effet, le pois est la légumineuse à graines riches en protéines qui, depuis les années 70, s'est le plus développée en Europe et principalement en France, non seulement comme source protéique pour l'alimentation animale, mais aussi pour l'alimentation humaine.

Les protéines de pois sont constituées, comme toutes les protéines de légumineuses, de trois classes de protéines principales : les globulines, les albumines et les protéines dites insolubles.

L'intérêt des protéines de pois réside dans leurs bonnes capacités émulsifiantes, leur absence d'allergènicité, et leur faible coût, ce qui en fait un ingrédient fonctionnel économique.

De plus, les protéines de pois participent favorablement au développement durable et leur impact carbone est très positif. En effet, la culture du pois est respectueuse de l'environnement, et ne nécessite pas d'engrais azotés, car le pois fixe l'azote de l'air.

Les protéines de pois présentent un profil en acides aminés très particulier, différent de celui des protéines de lait ou d'autres protéines végétales. Le profil en acides aminé de protéines de pois est en particulier riche :
- en arginine, qui joue un rôle important dans l'effort physique et dans le maintien du système immunitaire. Les protéines de pois contiennent plus d'arginine que la plupart des autres protéines végétales ou animales.
- en lysine, qui joue un rôle important dans la croissance des êtres vivants, en particulier dans la croissance osseuse,
- en acides aminés possédant une chaîne ramifiée (isoleucine, leucine et valine) qui aident au maintien et à la (re)construction des tissus musculaires,
- en glutamine et en acide glutamique, qui sont une source d'énergie pour les muscles.

La composition aqueuse comprenant au moins une protéine végétale peut se présenter sous forme de solution, de dispersion ou de suspension aqueuse d'au moins une protéine végétale. De préférence, il s'agit d'une solution d'au moins une protéine végétale.

La composition comprenant au moins une protéine végétale mise en oeuvre dans le procédé l'invention présente avantageusement une teneur en protéines totales (N x 6,25), d'au moins 60 % en poids de produit sec. De préférence, on utilise dans le cadre de la présente invention une composition ayant une teneur en protéines élevée, comprise entre 70 % et 97 % en poids de produit sec, de préférence entre 76 % et 95 %, plus préférentiellement encore comprise entre 78 % et 88 %, et en particulier comprise entre 78 % en 85 %. La teneur en protéines totales est mesurée en effectuant le dosage de la fraction azotée soluble contenue dans l'échantillon selon la méthode de Kjeldahl. Puis, le taux de protéines totales est obtenu en multipliant le taux d'azote exprimé en pourcentage de poids de produit sec par le facteur 6,25.

En outre, ladite composition comprenant au moins une protéine végétale, en particulier une protéine de pois, peut présenter une teneur en protéines solubles, exprimée selon un test décrit ci-après de mesure de la solubilité dans l'eau des protéines, comprise entre 20 % et 99 %. De préférence, on utilise dans le cadre de la présente invention une composition ayant un taux élevé de protéines solubles compris entre 45 % et 90 %, plus préférentiellement encore entre 50 % et 80 %, et en particulier entre 55 % et 75 %.

Pour déterminer le taux de protéines solubles, on mesure la teneur en protéines solubles dans l'eau dont le pH est ajusté à 7,5 +/- 0,1 à l'aide d'une solution de HCl ou NaOH, par une méthode de dispersion d'une prise d'essai de l'échantillon dans de l'eau distillée, centrifugation et analyse du surnageant. Dans un bécher de 400 ml, on introduit 200,0 g d'eau distillée à 20°C +/- 2°C, et on place le tout sous agitation magnétique (barreau aimanté et rotation à 200 rpm). On ajoute exactement 5 g de l'échantillon à analyser. On agite pendant 30 min, et on centrifuge pendant 15 min à 4.000 rpm. On réalise, sur le surnageant la méthode de détermination de l'azote selon la méthode précédemment décrite.

La protéine végétale présente de manière préférée plus de 50 %, plus préférentiellement plus de 60 %, encore plus préférentiellement plus de 70 %, encore plus préférentiellement plus de 80 %, et en particulier plus de 90 % de protéines de plus de 1 000 Da. La détermination du poids moléculaire de la protéine peut être réalisée selon la méthode décrite ci-après. En outre, ces compositions comprenant au moins une protéine végétale, en particulier une protéine de pois, présentent de manière préférée un profil de distribution des poids moléculaires constitué de :
- 1 % à 8 %, de préférence de 1,5 % à 4 %, et plus préférentiellement encore de 1,5 % à 3 %, de protéines de plus de 100 000 Da,
- 20 % à 55 %, de préférence de 25 % à 55 %, de protéines de plus de 15 000 Da et d'au plus 100 000 Da,
- 15 % à 30 % de protéines de plus de 5 000 Da et d'au plus 15 000 Da,
- et de 25 % à 55 %, de préférence de 25 % à 50 %, et plus préférentiellement encore de 25 % à 45 % de protéines d'au plus 5 000 Da.

Des exemples de compositions comprenant au moins une protéine végétale, en particulier une protéine de pois, selon l'invention, ainsi que le détail de la méthode de détermination des poids moléculaires peuvent être trouvés dans le brevet WO 2007/017572.

Selon la présente invention, la protéine végétale peut se présenter par exemple sous forme d'un concentrat de protéine végétale, d'un isolat de protéine végétale ou d'un hydrolysat de protéines végétales, de préférence d'un concentrat de protéine de pois, d'un isolat de protéine de pois ou d'un hydrolysat de protéine de pois.

Les concentrats et les isolats de protéines végétales, et en particulier de pois, sont définis en regard de leur teneur en protéines (cf. la revue de J. GUEGUEN de 1983 dans Proceedings of european congress on plant proteins for human food (3-4) pp 267 - 304):
- les concentrats de protéines végétales, et en particulier de pois, sont décrits comme présentant une teneur en protéines totales de 60 % à 75 % sur sec, et
- les isolats de protéines végétales, et en particulier de pois, sont décrits comme présentant une teneur en protéines totales de 90 % à 95 % sur sec,
les teneurs en protéines étant mesurées par la méthode de Kjeldhal, la teneur en azote étant multipliée par le facteur 6,25.

Les hydrolysats de protéines végétales, et en particulier de pois, sont définis comme des préparations obtenues par hydrolyse par voie enzymatique, par voie chimique, ou par les deux voies simultanément ou successivement, de protéines végétales, et en particulier de pois. Les hydrolysats de protéines comprennent une proportion plus élevée en peptides de différentes tailles et en acides aminés libres que la composition originale. Cette hydrolyse peut avoir un impact sur la solubilité des protéines. L'hydrolyse enzymatique et/ou chimique est par exemple décrite dans la demande de brevet WO 2008/001183. De préférence, l'hydrolyse de protéines n'est pas complète, c'est-à-dire ne résulte pas en une composition comprenant uniquement ou essentiellement des acides aminés et des petits peptides (de 2 à 4 acides aminés). Les hydrolysats préférés comprennent plus de 50 %, plus préférentiellement plus de 60 %, encore plus préférentiellement plus de 70 %, encore plus préférentiellement plus de 80 %, et en particulier plus de 90 % de protéines et de polypeptides de plus de 500 Da.

Les procédés de préparation d'hydrolysats de protéines sont bien connus de l'homme du métier et peuvent par exemple comprendre les étapes suivantes : dispersion des protéines dans l'eau pour obtenir une suspension, hydrolyse de cette suspension par le traitement choisi. Le plus souvent, il s'agira d'un traitement enzymatique combinant un mélange de différentes protéases, éventuellement suivi d'un traitement thermique destiné à inactiver les enzymes encore actives. La solution obtenue peut ensuite être filtrée sur une ou plusieurs membranes de façon à séparer les composés insolubles, éventuellement l'enzyme résiduelle et les peptides de haut poids moléculaire (supérieur à 10 000 daltons).

Ainsi, dans un mode de réalisation, la protéine végétale se présente sous forme d'un concentrat de protéine végétale, ou d'un isolat de protéine végétale, de préférence d'un concentrat de protéine de pois ou d'un isolat de protéine de pois.

Dans un autre mode de réalisation de la présente invention, la composition comprenant au moins une protéine végétale, en particulier une protéine de pois, se présente sou forme d'un hydrolysat de protéines végétales, en particulier de pois.

Selon un mode préféré de réalisation de l'invention, les compositions comprenant au moins une protéine végétale, en particulier une protéine de pois, peuvent subir un traitement thermique de conservation à température élevée et pendant un temps court avant la réalisation de l'étape d'abaissement du pH, ledit traitement pouvant être choisi parmi les traitements HTST (High Température Short Time) et UHT (Ultra Haute Température). Ce traitement permet avantageusement de réduire les risques bactériologiques.

Dans la présente invention, le terme « protéine laitière » désigne toutes les protéines issues du lait et des produits dérivés du lait. D'une manière générale, les protéines laitières mises en oeuvre dans le procédé selon l'invention peuvent se présenter sous forme solide, notamment sous forme de poudre, sous forme pâteuse ou sous forme liquide, notamment sous forme de solution, de dispersion ou de suspension, notamment aqueuses, de préférence sous forme de solution, de préférence encore sous forme de solution aqueuse.

D'un point de vue chimique, les protéines laitières se distinguent en deux groupes : les caséines et les protéines sériques. Les caséines représentent 80 % des protéines totales du lait. Les protéines sériques, qui représentent les 20 % restants, sont solubles à pH 4,6. Parmi les protéines sériques, on trouve principalement le β-lactoglobuline, l'α-lactalbumine, le sérum albumine bovine, les immunoglobulines et la lactoferrine.

Les protéines sériques sont généralement obtenues par les procédés d'ultrafiltration, de concentration et de séchage.

Les caséines sont obtenues à partir de lait écrémé et sont précipitées soit par acidification au moyen d'acide ou de cultures bactériennes inoffensives et appropriées à l'alimentation humaine (caséines acides), soit par addition de présure ou d'autres enzymes coagulant le lait (caséines présure). Les caséinates sont les produits obtenus par séchage de caséines acides traitées avec des agents neutralisants. Selon les agents neutralisants utilisés, on obtient des caséinates de sodium, de potassium, de calcium et mixte (=co-neutralisation). Les caséines natives peuvent être obtenues à partir de lait écrémé par microfiltration tangentielle et diafiltration à l'eau.

D'une manière générale, les protéines de lait peut être des caséines, des caséinates, des protéines sériques et leurs mélangés.

Selon la présente invention, la protéine laitière est une caséine. Les caséines comprennent les caséines natives, les caséines acides, les caséines présures, et les caséinates dans le groupe constitué par les caséinates de sodium, les caséinates de potassium et les caséinates de calcium.

Selon la présente invention, la protéine laitière se présente sous forme d'un rétentat de caséine micellaire.

Selon un mode réalisation optionnel, l'au moins une protéine laitière peut subir un traitement thermique de conservation avant l'introduction dans la composition aqueuse comprenant au moins une protéine végétale. Le traitement des aliments par la chaleur (ou traitement thermique) est aujourd'hui la plus importante technique de conservation de longue durée. Il a pour objectif de détruire ou d'inhiber totalement ou partiellement les enzymes et les microorganismes, dont la présence ou la prolifération pourrait altérer la denrée considérée ou la rendre impropre à la consommation.

L'effet d'un traitement thermique est lié au couple temps/température. De manière générale, plus la température est élevée et plus la durée est longue, plus l'effet sera important. Selon l'effet recherché, on distingue plusieurs traitements thermiques.

La stérilisation par la chaleur consiste à exposer les aliments à une température, généralement supérieure à 100°C, pendant une durée suffisante pour inhiber les enzymes et toute forme de microorganismes, même les bactéries sporulantes. Lorsque la stérilisation est réalisée à haute température (135°C à 150°C) pendant une durée n'excédant pas 15 secondes, on parle de stérilisation UHT (Ultra Haute Température). Cette technique a l'avantage de préserver la qualité nutritionnelle et organoleptique du produit stérilisé.

La pasteurisation est un traitement thermique modéré et suffisant permettant la destruction des microorganismes pathogènes et d'un grand nombre de microorganismes d'altération. La température du traitement est généralement inférieure à 100°C et la durée est de quelques secondes à quelques minutes. Lorsque la pasteurisation est réalisée à 72°C minimum pendant 15 secondes, on parle de pasteurisation HTST (High Température Short Time). La pasteurisation détruit les germes pathogènes et l'essentiel de la flore saprophyte. Mais tous les microorganismes n'étant pas éliminés par la pasteurisation, ce traitement thermique doit être suivi d'un brusque refroidissement. Les aliments pasteurisés sont alors habituellement conservés au froid (+4°C) afin de ralentir le développement des germes encore présents et la durée de conservation est limitée le plus souvent à une semaine.

La thermisation est un traitement thermique consistant à porter la solution à une température supérieure à 40°C et inférieure à 72°C. C'est une forme amoindrie de la pasteurisation. Son objectif principal est la réduction de la flore totale du lait, sans modifier pour autant ses caractéristiques technologiques.

Selon la présente invention, ledit traitement thermique pourra être choisi parmi les traitements pré-listés ci-dessus, de préférence on choisira une pasteurisation, notamment HTST.

De préférence, le rapport (poids de matière azotée apportée par la composition comprenant au moins une protéine végétale) sur (poids de matière azotée apportée par la composition comprenant au moins une protéine laitière) est compris entre 99 :1 et 1 :99, plus préférentiellement entre 80 :20 et 20 :80, plus préférentiellement encore entre 65 :35 et 35 :65.

Dans le rapport précédent, les poids respectifs en protéines totales sont mesurés par la méthode en effectuant le dosage de la fraction azotée soluble contenue dans l'échantillon selon la méthode de Kjeldahl. Puis, le taux de protéines totales est obtenu en multipliant le taux d'azote exprimé en pourcentage de poids de produit sec par le facteur 6,25. Cette méthode est bien connue de l'homme du métier.

L'étape d'abaissement du pH de la composition aqueuse comprenant au moins une protéine végétale peut être réalisée en ajoutant à cette composition aqueuse un acide, et de préférence un acide dont l'utilisation est autorisée dans le domaine agroalimentaire. L'acide peut par exemple être choisi dans le groupe constitué de l'acide chlorhydrique, l'acide acétique, l'acide phosphorique, l'acide citrique, l'acide sorbique, l'acide benzoïque, l'acide tartrique, l'acide lactique, l'acide propionique, l'acide borique, l'acide malique et l'acide fumarique. L'ajout de l'acide peut éventuellement s'accompagner d'une agitation de la composition aqueuse.

La composition acidifiée de protéines végétales peut éventuellement être agitée pendant une durée d'au moins 15 minutes, plus préférentiellement d'au moins 30 minutes, plus préférentiellement encore d'au moins 1 heure et en particulier d'au moins 2 heures. Cette agitation favorise avantageusement la dissociation et la solubilisation des protéines végétales dans la composition acidifiée. Cette étape d'agitation peut être réalisée à une température favorisant la dissociation et la solubilisation, de préférence entre 1°C et 100°C, plus préférentiellement entre 2°C et 40°C, et encore plus préférentiellement entre 4°C et 35°C.

L'étape de remontée du pH de la composition acidifiée peut être réalisée en ajoutant au mélange un alkali, de préférence un alkali dont l'utilisation est autorisée dans le domaine agroalimentaire. La base peut par exemple être choisie dans le groupe constitué de la soude, le sorbate de sodium, le sorbate de potassium, le sorbate de calcium, le benzoate de sodium, le benzoate de potassium, le benzoate de potassium, le formiate de sodium, le formiate de calcium, le nitrate de sodium, le nitrate de potassium, l'acétate de potassium, le diacétate de potassium, l'acétate de calcium, le diacétate de potassium, l'acétate de calcium, l'acétate d'ammonium, le propionate de sodium, le propionate de calcium et le propionate de potassium. L'ajout de la base peut éventuellement s'accompagner d'une agitation du mélange, pendant une durée d'au moins 15 minutes, plus préférentiellement d'au moins 30 minutes, plus préférentiellement encore d'au moins 1 heure et en particulier d'au moins 2 heures.

Cette étape d'agitation peut être réalisée à une température favorisant la dissociation et la solubilisation, de préférence entre 1°C et 100°C, plus préférentiellement entre 2°C et 40°C, et encore plus préférentiellement entre 4°C et 35°C.

Dans un mode de réalisation préféré, le pH est remonté jusqu'à un pH de 7. On parle alors de neutralisation.

Le mélange obtenu après introduction de l'au moins une protéine laitière dans la composition aqueuse comprenant au moins une protéine végétale obtenu à l'issue de l'étape de remontée du pH peut également être soumis à un traitement thermique de conservation. Le traitement des aliments par la chaleur (ou traitement thermique) est aujourd'hui la plus importante technique de conservation de longue durée. Il a pour objectif de détruire ou d'inhiber totalement ou partiellement les enzymes et les microorganismes, dont la présence ou la prolifération pourrait altérer la denrée considérée ou la rendre impropre à la consommation.

L'effet d'un traitement thermique est lié au couple temps/température. De manière générale, plus la température est élevée et plus la durée est longue, plus l'effet sera important. Selon l'effet recherché, on distingue plusieurs traitements thermiques.

La stérilisation par la chaleur consiste à exposer les aliments à une température, généralement supérieure à 100°C, pendant une durée suffisante pour inhiber les enzymes et toute forme de microorganismes, même les bactéries sporulantes. Lorsque la stérilisation est réalisée à haute température (135°C à 150°C) pendant une durée n'excédant pas 15 secondes, on parle de stérilisation UHT (Ultra Haute Température). Cette technique a l'avantage de préserver la qualité nutritionnelle et organoleptique du produit stérilisé.

La pasteurisation est un traitement thermique modéré et suffisant permettant la destruction des microorganismes pathogènes et d'un grand nombre de microorganismes d'altération. La température du traitement est généralement inférieure à 100°C et la durée est de quelques secondes à quelques minutes. Lorsque la pasteurisation est réalisée à 72°C minimum pendant 15 secondes, on parle de pasteurisation HTST (High Temperature Short Time). La pasteurisation détruit les germes pathogènes et l'essentiel de la flore saprophyte. Mais tous les microorganismes n'étant pas éliminés par la pasteurisation, ce traitement thermique doit être suivi d'un brusque refroidissement. Les aliments pasteurisés sont alors habituellement conservés au froid (+4°C) afin de ralentir le développement des germes encore présents et la durée de conservation est limitée le plus souvent à une semaine.

La thermisation est un traitement thermique consistant à porter la solution à une température supérieure à 40°C et inférieure à 72°C. C'est une forme amoindrie de la pasteurisation. Son objectif principal est la réduction de la flore totale du lait, sans modifier pour autant ses caractéristiques technologiques.

Selon la présente invention, ledit traitement thermique pourra être choisi parmi les traitements pré-listés ci-dessus, de préférence on choisira une pasteurisation, notamment HTST.

L'étape d'homogénéisation du mélange comprenant les protéines végétale et laitière permet d'obtenir une meilleure solubilisation des protéines végétales et de favoriser les interactions entre les protéines végétales et les protéines laitières.

L'homogénéisation peut être réalisée selon des techniques connues de l'homme du métier. Une technique particulièrement préférée est l'homogénéisation à haute pression. Il s'agit d'un traitement physique au cours duquel un produit liquide ou pâteux est projeté sous forte pression à travers une tête d'homogénéisation de géométrie particulière. Ce traitement se traduit par une réduction de la taille des particules solides ou liquides se trouvant sous forme dispersée dans le produit traité. La pression de l'homogénéisation haute pression est typiquement comprise entre 30 bars et 1 000 bars. Dans le procédé objet de la présente invention, cette pression est de préférence comprise entre 150 bars et 500 bars, plus préférentiellement entre 200 bars et 400 bars, et encore plus préférentiellement entre 250 bars et 350 bars. En outre, un ou plusieurs cycles d'homogénéisation peuvent être effectués. De préférence, le nombre de cycles d'homogénéisation à haute pression est compris entre 1 et 4.

L'homogénéisation peut également être réalisée à l'aide d'autres dispositifs connus, par exemple choisis parmi les mixers, les broyeurs colloïdaux, les homogénéisateurs à meules et à microbilles, les homogénéisateurs ultrasoniques et les homogénéisateurs à obturateurs.

Le mélange homogénéisé peut éventuellement être concentrée. Le procédé objet de l'invention peut donc en outre comprendre une étape de concentration de ladite composition. Cette étape de concentration peut intervenir éventuellement après une étape de traitement thermique et/ou une étape de stabilisation.

Après concentration, la teneur totale en protéines de la composition concentrée est de préférence comprise entre 100 g/kg et 600 g/kg en poids de protéines sur le poids total de la composition, plus préférentiellement comprise entre 150 g/kg et 400 g/kg et en particulier comprise entre 200 g/kg et 300 g/kg.

Le procédé objet de l'invention peut en outre comprendre une étape consistant à sécher le mélange homogénéisé, éventuellement concentrée. Le mode de séchage peut être choisi parmi les techniques connues de l'homme du métier, et en particulier dans le groupe constitué par l'atomisation, l'extrusion et la lyophilisation, la granulation, le lit fluidisé, les rouleaux sous vide, la micronisation.

Les conditions opératoires de l'étape de séchage sont adaptées à l'équipement choisi, de façon à permettre l'obtention d'une poudre.

Selon un mode préférentiel de l'invention, le séchage est réalisé par atomisation, selon les procédés et paramètres bien connus de l'homme du métier.

Le procédé objet de la présente invention permet d'obtenir un assemblage d'au moins une protéine végétale et d'au moins une protéine laitière, qui est également un objet de la présente invention.

Il a en effet été constaté que le procédé de préparation décrit ci-dessus, et en particulier la présence des étapes d'abaissement et de remontée du pH, favorise la formation d'assemblages entre la protéine végétale et la protéine laitière. L'assemblage d'au moins une protéine végétale et d'au moins une protéine laitière ainsi obtenu se distingue du simple mélange physique de ces deux types de protéines. Il s'agit d'une nouvelle structure à l'échelle supramoléculaire.

Ledit assemblage peut se présenter sous la forme d'une composition aqueuse, d'une composition aqueuse concentrée ou d'une poudre. Dans le cas d'une composition aqueuse, on parle plutôt de dispersion aqueuse.

Une composition aqueuse, ou dispersion aqueuse, comprenant l'assemblage d'au moins une protéine végétale et d'au moins une protéine laitière est obtenue à l'issue du procédé objet de la présente invention. Cette composition ou dispersion aqueuse a un pH compris de préférence entre 5 et 8 plus préférentiellement entre 5,5 et 7,5, et encore plus préférentiellement entre 5,8 et 7,1.

Le ratio pondéral de protéine végétale à protéine laitière dans l'assemblage selon l'invention est compris entre 20 :80 et 45 :55, et de préférence de 40 :60.

De préférence, le rapport (poids de matière azotée apportée par la composition comprenant au moins une protéine végétale) sur (poids de matière azotée apportée par la composition comprenant au moins une protéine laitière) est compris entre 99 :1 et 1 :99, plus préférentiellement entre 80 :20 et 20 :80, plus préférentiellement encore entre 65 :35 et 35 :65.

Dans le rapport précédent, les poids respectifs en protéines totales sont mesurés par la méthode en effectuant le dosage de la fraction azotée soluble contenue dans l'échantillon selon la méthode de Kjeldahl. Puis, le taux de protéines totales est obtenu en multipliant le taux d'azote exprimé en pourcentage de poids de produit sec par le facteur 6,25. Cette méthode est bien connue de l'homme du métier.

La teneur totale en protéines de la composition est de préférence comprise entre 20 % et 100 % en poids de produit sec, plus préférentiellement comprise entre 30 % et 90%, encore plus préférentiellement comprise entre 35 % et 85 %, et en particulier comprise entre 40 % et 80 %.

Lesdites teneurs étant indiquées en pourcentage de poids de produit sec sur le poids sec total de la composition.

Selon un autre mode de réalisation, la teneur en protéines de la composition est comprise entre 50% et 90% en poids de produit sec.

Lorsque l'assemblage selon l'invention se présente sous forme d'une dispersion aqueuse, c'est-à-dire lorsque l'assemblage est mis en suspension dans un liquide, la teneur en protéines est indiquée en concentration massique, c'est-à-dire en concentration pondérale qui exprime le rapport entre la masse d'un soluté, i.e. les protéines et le volume de dispersion aqueuse.

L'assemblage comprenant au moins une protéine végétale et au moins une protéine laitière selon l'invention peut éventuellement comprendre d'autres ingrédients. Ces ingrédients optionnels peuvent avoir des propriétés intéressantes pour certaines applications. Ils peuvent être choisis dans le groupe constitué par les fibres solubles, les fibres insolubles, les vitamines, les sels minéraux, les oligo-éléments et leurs mélanges. Les ingrédients optionnels peuvent être apportés par les compositions comprenant au moins une protéine végétale ou au moins une protéine laitière, ou ils peuvent être ajoutés lors de la préparation de l'assemblage.

L'assemblage selon l'invention peut de plus contenir tout additif approprié, comme des arômes, des colorants, des agents stabilisants, des excipients, des lubrifiants, des conservateurs, dès lors qu'ils n'impactent pas de façon négative les propriétés fonctionnelles finales recherchées. Il peut également s'agir de principes actifs pharmaceutiques ou phytosanitaires, de détergents. On entend par principe actif, dans la présente invention, toute molécule active possédant un effet pharmacologique démontré et un intérêt thérapeutique également démontré cliniquement.

La présente invention a également pour objet un assemblage d'un rétentat de caséines micellaires et d'au moins une protéine de pois susceptible d'être obtenue selon le procédé de préparation décrit dans la présente demande.

L'assemblage d'un rétentat de caséines micellaires et d'au moins une protéine de pois selon l'invention trouve une application dans différents secteurs industriels, et plus particulièrement dans le domaine agroalimentaire.

L'assemblage objet de l'invention possède en effet des propriétés fonctionnelles et/ou sensorielles différentes de celles du simple mélange physique de protéines végétales et de protéines laitières. En particulier, cet assemblage possède au moins l'une des propriétés fonctionnelles suivante :
- une solubilité améliorée ;
- une amélioration de la tenue en suspension ;
- un pouvoir coagulant amélioré ;
par rapport au simple mélange physique de protéines végétales et de protéines laitières. Avec l'assemblage selon l'invention, on observe par conséquent un effet synergique sur les propriétés fonctionnelles. La synergie reflète communément un phénomène par lequel plusieurs acteurs, facteurs ou influences agissant ensemble créent un effet plus grand que la somme des effets attendus s'ils avaient opéré indépendamment, ou créent un effet que chacun d'entre eux n'aurait pas pu obtenir en agissant isolément. Dans la présente demande, le mot est également utilisé pour désigner un résultat plus favorable lorsque plusieurs éléments d'un système agissent de concert.

Dans le cadre de la présente invention, la synergie reflète l'existence d'un mélange intime entre les différents composants de l'assemblage, que leur répartition au sein de l'assemblage est sensiblement homogène, et que ceux-ci ne sont pas uniquement liés entre eux par un simple mélange physique.

L'assemblage d'un rétentat de caséines micellaires et d'au moins une protéine de pois selon l'invention est un phénomène ubiquitaire qui peut résulter en la formation d'une variété de structures supramoléculaires. Ces structures supramoléculaires peuvent se différencier de par leur taille (de quelques nanomètres à plusieurs micromètres), leur composition protéique, leur morphologie (agrégats, fibres, nanotubes, etc.). Ces assemblages interviennent dans la fonctionnalité de ces protéines (pouvoir gélifiant, moussant et émulsifiant ; vecteur de molécules bioréactives, etc.). Plusieurs facteurs sont susceptibles d'influencer la nature de ces structures supramoléculaires. Ils peuvent être de nature extrinsèque aux protéines comme les paramètres physico-chimiques du milieu ou encore de nature intrinsèque aux protéines. Ces facteurs intrinsèques, liés à leur stabilité et au degré d'exposition des différentes régions électrostatiques et hydrophobes de la protéine, sont eux-mêmes fréquemment modulés par les paramètres physico-chimiques du milieu.

Les protéines sont des polyélectrolytes caractérisés par une diversité conformationnelle, une distribution hétérogène de charges et de régions hydrophobes à leur surface. Elles apparaissent donc comme des polyélectrolytes hétérogènes et complexes. Ces différents facteurs intrinsèques aux protéines expliquent par conséquent la diversité et la complexité des comportements rencontrés lors de leur assemblage, ce qui les distingue de l'assemblage de colloïdes de synthèse aux structures monomériques et aux propriétés physico-chimiques plus homogènes et donc plus facilement contrôlables.

Aujourd'hui, le rôle joué par la conformation des protéines dans la formation des assemblages protéiques est clairement démontré. La formation d'assemblages protéiques à partir de protéines globulaires nécessite fréquemment une modification, au moins partielle, de leur structure tridimensionnelle. En effet, les propriétés d'assemblage des protéines globulaires sont accrues dans des conditions physico-chimiques où les protéines globulaires présentent un certain degré de dépliement conduisant généralement à l'exposition au solvant de régions hydrophobes. La modification de la conformation des protéines est le plus souvent réalisée en jouant sur les conditions physicochimiques du milieu.

Les Sociétés Demanderesses ont réalisé des mesures de granulométrie laser sur les assemblages selon la présente invention afin de vérifier s'il y avait un impact des différents traitements sur la taille des particules de l'assemblage par rapport à la taille des particules de protéines végétales prises seules et de celle des protéines de lait prises seules également.

Le principe de cette mesure est donné ci-après dans les exemples ainsi que les courbes de mesure.

Ce qui ressort de ces différentes mesures, est que lorsqu'elles sont faites sur les protéines de départ, on constate que les protéines végétales, et plus particulièrement les protéines de pois sont environ dix fois plus grosses que les protéines de lait quand on les prend séparément. Quand on les assemble (ratio 60/40 lait/pois), le pic correspondant aux protéines de lait n'est plus visible, ce qui peut laisser dire que les 2 types de protéines se sont réarrangés selon un processus moléculaire.

Les Sociétés Demanderesses ont constaté que les propriétés fonctionnelles très intéressantes de l'assemblage d'un rétentat de caséines micellaires et d'au moins une protéine de pois selon l'invention ne pouvaient être obtenues si chaque composé est utilisé séparément ou si les composés sont utilisés simultanément mais sous la forme d'un simple mélange des différents constituants.

En outre, l'assemblage selon l'invention peut posséder des propriétés fonctionnelles intéressantes, en particulier :
- un pouvoir émulsifiant ;
- un pouvoir moussant ;
- un pouvoir gélifiant ;
- un pouvoir épaississant,
- un pouvoir viscosant,
- un pouvoir foisonnant ;
- un pouvoir mouillant (capacité d'absorption d'eau) ;
- un pouvoir filmogène et/ou adhésif
- un pouvoir de réactivité thermique,
- un pouvoir dans les réactions de Maillard.

Un objet de l'invention est ainsi l'utilisation de l'assemblage selon l'invention en tant qu'agent fonctionnel, et de préférence en tant qu'agent émulsifiant, agent moussant, agent gélifiant, agent épaississant, agent viscosant, agent foisonnant, agent rétenteur d'eau, agent filmogène et/ou adhésif, agent ayant un pouvoir dans les réactions de Maillard, agent modifiant les propriétés sensorielles des matrices alimentaires dans lesquelles il est utilisé.

Un autre objet de l'invention est l'utilisation de l'assemblage selon l'invention pour la préparation d'une composition alimentaire. Cette composition alimentaire peut être choisie dans le groupe constitué par les boissons, les produits laitiers, les confiseries tels que les chocolats, les desserts lactés, les préparations destinées à la nutrition clinique et/ou à des individus souffrant de dénutrition, les préparations destinées à la nutrition infantile, les mélanges de poudres destinés à des produits de régime, ou pour sportifs, les produits hyperprotéinés pour la nutrition diététique, les soupes, sauces, et aides culinaires, les confiseries, comme le chocolat par exemple et tous les produits dérivés de ce dernier, les produits à base de viande, plus particulièrement dans les secteurs des pâtes fines et des saumures, notamment dans la fabrication de jambons et des charcuteries, les produits à base de poissons, comme les produits à base de surimi, les produits céréaliers comme le pain, les pâtes, biscuits, pâtisseries, céréales et barres de céréales, les produits végétariens, y compris les produits fermentés à base de protéines végétales, comme le tofu par exemple, les plats cuisinés, les agents blanchissants tels les coffee whiteners, les produits destinés à l'alimentation animale, comme par exemple les produits destinés à l'alimentation des veaux. De préférence, la composition alimentaire est choisie dans le groupe constitué par les produits laitiers et plus préférentiellement encore dans le groupe constitué par les fromages frais et affinés, les fromages tartinables, les laits fermentés, les smoothies au lait, les yaourts, les spécialités laitières et les glaces fabriquées à partir de lait.

Il a également été observé de manière inattendue que dans le domaine alimentaire par exemple, l'assemblage selon la présente invention présente l'avantage complémentaire de se substituer totalement ou partiellement aux matières grasses couramment utilisées dans les recettes, sans impacter sur les propriétés sensorielles et texturales finales.

Dans un mode de réalisation avantageuse, la composition alimentaire est donc une composition alimentaire réduite en matière grasse.

La composition alimentaire peut également être enrichie en protéines.

Selon un mode réalisation avantageux, la composition alimentaire est un chocolat. Il est en effet possible de préparer un chocolat à teneur réduite en protéines de lait et/ou en matière grasse en substituant les protéines de lait initialement présentes par un assemblage d'un rétentat de caséines micellaires et d'au moins une protéine de pois selon l'invention. Malgré le fait que les protéines de pois et les protéines de lait présentent des compositions éloignées, le remplacement total des protéines de lait par un assemblage d'un rétentat de caséines micellaires et d'au moins une protéine de pois dans un chocolat ne modifie ni l'aspect, ni le toucher, ni l'odeur, ni le goût, ni la texture de ce dernier.

En particulier, les chocolats obtenus comprenant l'assemblage selon l'invention conservent :
- à la vue : une surface lisse et brillante,
- à l'odorat : une odeur douce, fruitée et très agréable,
- au goût : une onctuosité, une rondeur en bouche et un aspect crémeux,
ces caractéristiques étant recherchées et très appréciées des consommateurs de chocolat.

D'un point de vue technologique, ce remplacement total ou partiel des protéines de lait par des protéines de pois ne modifie pas significativement le comportement rhéologique des préparations qui sont mises en oeuvre. Le comportement rhéologique peut être quantifié par deux mesures : la valeur de la viscosité et la valeur du seuil d'écoulement. Dans le domaine agroalimentaire de la confiserie et donc du chocolat, le modèle théorique généralement employé est le modèle de Casson. Le comportement des chocolats lors de leur fabrication n'étant pas modifié, il n'y aura donc pas besoin de modifier les paramètres du procédé de fabrication.

Une autre utilisation particulièrement avantageuse et intéressante de la présente invention concerne la préparation d'un produit laitier choisi dans le groupe constitué par les fromages frais et affinés, les fromages tartinables, les laits fermentés, les smoothies au lait, les yaourts, les spécialités laitières, les glaces fabriquées à partir de lait.

Ainsi, la présente invention concerne avantageusement un procédé de préparation d'un produit laitier choisi dans le groupe constitué par les fromages frais et affinés, les fromages tartinables, les laits fermentés, les smoothies au lait, les yaourts, les spécialités laitières, les glaces fabriquées à partir de lait, caractérisé en ce que les protéines de lait initialement présentes sont substituées par un assemblage d'un rétentat de caséines micellaires et d'au moins une protéine de pois obtenu selon le procédé de la présente invention.

Selon un autre mode plus préférentiel, l'assemblage selon l'invention est utilisé pour la fabrication de fromages.

Ainsi, la présente invention concerne avantageusement un procédé de préparation d'un fromage, caractérisé en ce que les protéines de lait initialement présentes sont substituées par un assemblage d'un rétentat de caséines micellaires et d'au moins une protéine de pois obtenu selon le procédé de la présente invention.

Dans la présente invention, le terme fromage désigne un aliment obtenu à partir de lait coagulé ou de produits laitiers, comme la crème, puis éventuellement d'un égouttage, suivi ou non d'une étape de fermentation et éventuellement d'un affinage (fromages affinés). Selon le décret français n° 2007-628 du 27 avril 2007, la dénomination « fromage » est réservée au produit fermenté ou non, affiné ou non, obtenu à partir de matières d'origine exclusivement laitière (lait entier, lait partiellement ou totalement écrémé, crème, matière grasse, babeurre), utilisées seules ou en mélange, et coagulées en totalité ou en partie avant égouttage ou après élimination partielle de leur eau.

Dans la présente invention, le terme fromage désigne également tous les fromages fondus et tous les fromages fondus tartinables. Ces deux types de fromages sont obtenus par broyage, mélange, fonte et émulsification, sous l'effet de la chaleur et d'agents émulsifiants, d'une ou plusieurs variétés de fromage, avec ou sans adjonction de constituants laitiers et/ou d'autres denrées alimentaires (crème, vinaigre, épices, enzymes,..).

Dans un autre mode préférentiel, l'assemblage selon l'invention est utilisé pour la fabrication de yaourts ou laits fermentés.

Ainsi, la présente invention concerne avantageusement un procédé de préparation d'un yaourt ou d'un lait fermenté, caractérisé en ce que les protéines de lait initialement présentes sont substituées par un assemblage d'un rétentat de caséines micellaires et d'au moins une protéine de pois obtenu selon le procédé de la présente invention.

Dans la présente invention, la substitution des protéines de lait initialement présentes peut être totale ou partielle. L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### EXEMPLES

### Exemple 1 : Préparation des différents assemblages utilisés

### A. Matières premières

Protéines laitières : Les protéines laitières utilisées sont issues d'une fraction de lait et contiennent 92% de caséines micellaires sur la matière azotée totale.

Il peut s'agir par exemple du rétentat de caséines micellaires PROMILK 852 B commercialisé par la société INGREDIA, qui est sous la forme liquide (rétentat à 15 % de matière sèche), stabilisé par addition de 0.02% de bronopol (agent de conservation), et conservé à 4°C.

### Protéines végétales :

### Précision sur le procédé de fractionnement du pois

Le pois contient environ 27% en poids de matières protéiques. Parmi les constituants du pois, les plus valorisés actuellement sont l'amidon, les fibres et les protéines, encore désignés sous l'expression constituants nobles. Le procédé de valorisation consiste à réaliser initialement un lait d'amidon, par mélange dans un pétrin entre la farine de pois et d'eau. Après avoir extrait de ce lait l'amidon et les fibres, on dispose d'un produit riche en protéines. On effectue alors une étape de floculation sur le lait, notamment par thermo coagulation, dont l'objectif est d'insolubiliser la ou les protéines d'intérêt. A ce stade du procédé, il est nécessaire de réaliser une séparation notamment par décantation centrifuge, de manière à isoler une composition très riche en protéines encore appelé « floc ».

Les exemples ont été réalisés avec un lait de pois riche en protéines sur lequel on a réalisé les étapes suivantes, de façon à obtenir au final un floc de protéines de pois :
Abaissement du pH et précipitation au point isoélectrique à pH 4,5 avec de l'HCl 1N sous agitation à 500 rpm du lait de pois.
Solubilisation sous agitation à 500 rpm avec un barreau magnétique à 4°C pendant 2 heures.
Remontée du pH à la neutralité avec de la soude 1N.
Agitation de l'ensemble à 500 rpm avec un barreau magnétique pendant 30 minutes.
Stabilisation du mélange également appelé floculat de protéines de pois par addition d'azoture de sodium à 0,02%.
Conservation à 4°C.

### B. Procédé de mélange : constitution des assemblages

La composition de protéines laitières est sous une forme liquide et possède naturellement un pH de 7.

La composition de protéines de pois ou floculat de protéines de pois est également sous une forme liquide et possède après acidification puis neutralisation également un pH de 7.

### Essai 1 : assemblage 80/20 (protéines laitières/protéines végétales)

- Préparation d'une solution de protéines de pois dans l'eau à 32g/L de MAT maintenue à 4°C et sous agitation pendant 1 heure.
- Préparation d'une solution de protéines de lait dans l'eau à 128g/L de MAT maintenue à 4°C et sous agitation pendant 1 heure.
- Mélange des deux solutions de protéines en proportion 50/50 (v/v)
- Maintien à 4°C et sous agitation pendant 1 heure
- Pasteurisation 80°C instant (2.7bars)
- Evapoconcentration à 23% de MS
- Homogénéisation 300 bars
- Séchage par atomisation selon un barème de faisabilité déterminé par l'homme du métier.

### Essai 2 : assemblage 60/40 (protéines laitières/protéines végétales)

- Préparation d'une solution de protéines de pois dans l'eau à 64g/L de MAT et agitation pendant 1 heure.
- Préparation d'une solution de protéines de lait dans l'eau à 98g/L de MAT et agitation pendant 1 heure.
- Mélange des deux solutions de protéines en proportion 50/50 (v/v)
- Maintien à 4°C et sous agitation pendant 1 heure
- Evapoconcentration à 23% de MS
- Homogénéisation 300 bars
- Séchage par atomisation

Essai 3 : assemblage identique à celui décrit dans l'essai 2 mais sur lequel un traitement HTST a été appliqué sur le floculat de protéines de pois, après neutralisation et avant son mélange avec la composition de protéines laitières. .Il s'agit de l'assemblage 3 par la suite.

### Exemple 2 : Caractérisation des différentes propriétés fonctionnelles et / ou technologiques des assemblages obtenus selon l'exemple 1

| Critère | Unité | Simple mélange à sec 60/40 | Essai 1 | Essai 2 | Essai 3 |
|---|---|---|---|---|---|
| Matière sèche | % | | | 93,5 | 93,2 |
| Teneur en protéines | %/sec | | | 84,3 | 85,2 |
| Solubilité 5000G | % | | | 85.2 | 89.0 |
| Viscosité en solution à 15%, 40s⁻¹ | mPa.s | | | 67 | 160 |
| Capacité émulsifiante (Dmode) | µm | | 24.8 | 24.4 | 20.2 |
| Stabilité de l'émulsion (D90-D10) | µm | | | 35,6 | 29,1 |
| Test de gel à 4°C | mPa.s | 2.400 | | 15.000 | |
| Test de gel après pasteurisation | mPa.s | 200 | | 10.040 | |
| Test de gel après stérilisation | mPa.s | 1.040 | | 180 | |
| Test d'émulsion à 4°C | mPa.s | 380.000 | | 730.000 | |
| Test d'émulsion après pasteurisation | mPa.s | 430.000 | | 960.000 | |
| Test d'émulsion après stérilisation | mPa.s | 330.000 | | 928.000 | |
| Test de gélification | N | | 1.2 | 0.43 | |

Pour déterminer le taux de protéines dans les différents échantillons, on peut effectuer le dosage de la fraction azotée soluble contenue dans l'échantillon selon la méthode de KJELDAHL (NF V03-050, 1970). La détermination de l'azote ammoniacal est basée sur la formation d'un complexe coloré entre l'ion ammonium, le salicylate de sodium et du chlore, dont l'intensité de coloration est mesurée à 660 nm. Cette méthode est effectuée avec un appareil automatique à flux liquide continu TECHNICON.

La teneur en protéines des échantillons est estimée en multipliant leur teneur en azote par le facteur de conversion 6,25.

Cette méthode est bien connue de l'homme du métier.

Pour déterminer le taux de protéines solubles, on mesure la teneur en protéines solubles dans l'eau dont le pH est ajusté à 7,5 +/- 0,1 à l'aide d'une solution de HCl ou NaOH, par une méthode de dispersion d'une prise d'essai de l'échantillon dans de l'eau distillée, centrifugation et analyse du surnageant. Dans un bécher de 400 ml, on introduit 200,0 g d'eau distillée à 20°C +/- 2 °C, et on place le tout sous agitation magnétique (barreau aimanté et rotation à 200 tr/min). On ajoute exactement 5 g de l'échantillon à analyser. On agite pendant 30 min, et on centrifuge pendant 15 min à 4 000 tr/min. On réalise, sur le surnageant la méthode de détermination de l'azote selon la méthode précédemment décrite.

### Exemple 3 : Mesure de la taille des particules par granulométrie laser

La diffusion dynamique de la lumière ou DLS est une technique d'analyse spectroscopique non destructive permettant d'accéder à la taille de particules en suspension dans un liquide ou de chaînes de polymère en solution de 1 à 500 nm de diamètre environ.

On peut mesurer l'intensité de la lumière diffusée par les particules à un angle considéré (90° typiquement) au cours du temps. Cette dépendance en temps vient du fait que les particules dans un liquide sont soumises au mouvement Brownien à cause de l'agitation thermique.

La DLS aboutit à la mesure des rayons hydrodynamiques des particules et polymères. Le rayon hydrodynamique est le rayon d'une sphère théorique qui aurait le même coefficient de diffusion que la particule considérée. Pour une particule chargée, la sphère considérée contient la particule entourée de sa couche diffuse. En réalité il existe une dispersité des tailles rencontrées et différentes méthodes sont mises en oeuvre pour extraire l'intensité diffusée des différentes populations.

Les différences sont très marquées en intensité et la présence d'impuretés ou d'agrégats sont très visibles même en très petit nombre.

On obtient donc un rayon hydrodynamique, un indice de polydispersité et des indices sur l'allure du profil de distribution des tailles de particules de l'échantillon, en nombre, volume ou intensité.

Pour ces mesures, les essais 2 et 3 tels que décrits dans l'exemple 1ont été utilisés.

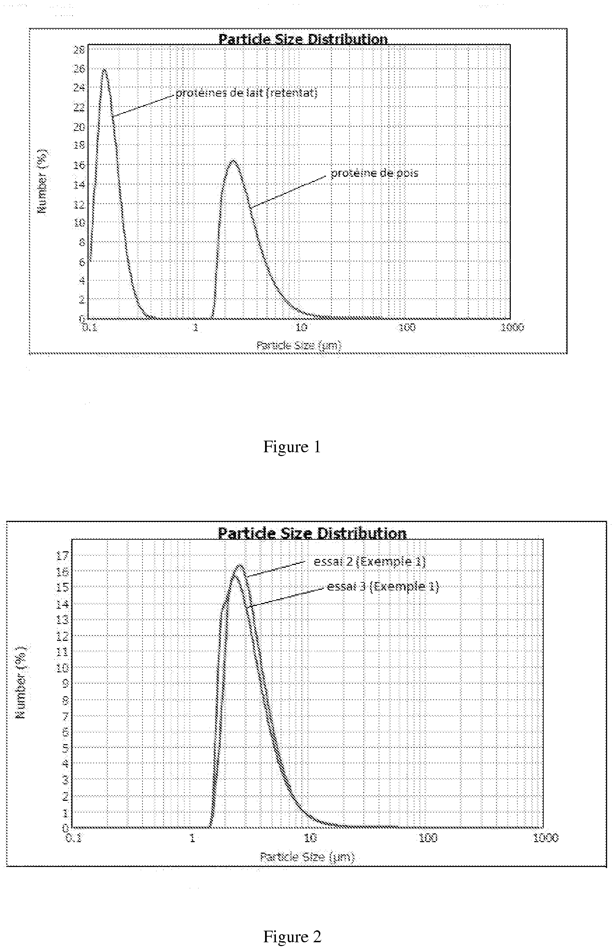

La première série de courbes, représentée à la figure 1, correspond à la distribution de taille des protéines de pois et des protéines de lait seules et la deuxième série de courbes, représentée à la figure 2, correspond à la distribution de taille des assemblages selon l'invention (essai 2 de l'exemple 1) et desdits assemblages ayant subis un traitement HTST (essai 3 de l'exemple 1).

A la figure 1, la courbe située le plus à gauche sur la graphique correspond à la distribution de taille réalisée sur les protéines laitières, et la courbe située le plus à droite correspond à des mesures réalisées sur un floculat de protéines de pois. Prises séparément, les protéines de pois sont environ dix fois plus grosses que les protéines de lait.

En regardant la deuxième série de courbes, représentée à la figure 2, on se rend compte que le pic correspondant aux protéines de lait visible sur la première série de courbes avec un point culminant à 0,105 µm n'est plus visible.

Ceci laisse envisager que les protéines se sont réarrangées entre elles lors de la préparation des assemblages selon l'invention.

S'il n'y avait eu qu'un simple mélange ou juxtaposition des deux types de protéines, nous aurions retrouvé deux pics sur chaque courbe, chacun correspondant au type de protéine. Le fait de ne retrouver qu'un pic unique démontre parfaitement que les deux types de protéines se sont réarrangés entre eux au niveau moléculaire.

### Exemple 4: Utilisation des assemblages obtenus selon l'exemple 1 dans la préparation de chocolat au lait à teneur réduite en protéines de lait et/ou en matière grasse

L'objectif de cet essai est d'utiliser les assemblages de la présente invention afin de réduire dans un premier temps les protéines de lait présentes dans le chocolat et dans un second temps de réduire également la teneur en matières grasses dans une recette de chocolat au lait, tout en ne modifiant pas le procédé de préparation du chocolat.

### A. Réduction de la quantité de protéines de lait

Deux témoins ont été réalisés.

Le premier contient 32% matière grasse au final et le second 30%, les pourcentages étant exprimés pour 100 gr de produit fini.

Pour cet essai, les assemblages 2 et 3 obtenus selon l'exemple 1 ont été utilisés. Il s'agit donc pour l'assemblage 2 d'un ratio 60/40 (protéines laitières/protéines végétales) et pour l'assemblage 3 du même ratio protéique mais avec un traitement final HTST appliqué.

### Formules

| | Control 32%MG | Assemblage 2 (32%MG) | Assemblage 3 (32%MG) |
|---|---|---|---|
| | % | % | % |
| Sucre cristal | 44,00 | 46,10 | 46,10 |
| Liqueur de cacao | 10,00 | 10,00 | 10,00 |
| Beurre de cacao | 20,70 | 18,60 | 18,60 |
| Mgla | 0,00 | 5,35 | 5,35 |
| Assemblage 2 | 0,00 | 7,10 | 0,00 |
| Assemblage 3 | 0,00 | 0,00 | 7,10 |
| lactose monohydrate | 0,00 | 7,75 | 7,75 |
| Lait entier en poudre (spray) | 20,20 | 0,00 | 0,00 |
| Poudre de lactosérum | 4,50 | 4,50 | 4,50 |
| Lécithine de soja | 0,60 | 0,60 | 0,60 |
| Total | 100,00 | 100,00 | 100,00 |

| | Control 30%MG | Assemblage 2 (30%MG) | Assemblage 3 (30%MG) |
|---|---|---|---|
| | % | % | % |
| Sucre cristal | 46,10 | 46,10 | 46,10 |
| Liqueur de cacao | 10,00 | 10,00 | 10,00 |
| Beurre de cacao | 18,60 | 20,70 | 20,70 |
| Mgla | 0,00 | 3,25 | 3,25 |
| Assemblage 2 | 0,00 | 7,10 | 0,00 |
| Assemblage 3 | 0,00 | 0,00 | 7,10 |
| Lait entier en poudre (spray) | 20,20 | 0,00 | 0,00 |
| Poudre de lactosérum | 4,50 | 4,50 | 4,50 |
| lactose monohydrate | 0,00 | 7,75 | 7,75 |
| Lécithine de soja | 0,60 | 0,60 | 0,60 |
| | 100,00 | 100,00 | 100,00 |

Aucun incident de fabrication, notamment lors de l'étape de conchage n'a été noté.

Les chocolats ont été goutés en aveugle par un jury d'experts en analyse sensoriel de 25 personnes. Le test réalisé en aveugle, consistait à déguster les trois échantillons pour chaque teneur en matière grasse et à les décrire. La dégustation est une opération qui consiste à expérimenter, analyser et apprécier les caractères organoleptiques et plus particulièrement les caractères organo-olfactifs d'un produit. La dégustation fait appel aux sens visuel, tactile, olfactif et gustatif. Pour cette dégustation, les qualificatifs employés étaient identiques pour les trois chocolats :
- Test d'observation : surface du chocolat lisse, moirée et légèrement brillante ;
- Test tactile : surface lisse, dure.
- Test olfactif : odeur douce, fruitée, très agréable.
- Test gustatif : onctuosité, rondeur en bouche, crémeux.

Il n'y a donc eu aucun impact sur le remplacement des protéines de lait présentes dans le chocolat par un assemblage entre une protéine de pois et une protéine de lait obtenu selon l'invention.

Il n'y a donc pas non plus d'impact dans cette matrice alimentaire du traitement HTST dudit assemblage.

### B. Réduction de la quantité de matières grasses

Deux essais de réduction de matières grasses (à 28% et à 26%) ont été réalisés en utilisant l'assemblage 2 obtenu selon l'exemple 1.

### Formules

| | Assemblage 2 (28%MG) | Assemblage 2 (26%MG) |
|---|---|---|
| | % | % |
| Sucre cristal | 48,10 | 50,10 |
| Liqueur de cacao | 10,00 | 10,00 |
| Beurre de cacao | 20,70 | 18,95 |
| MGLA | 1,25 | 1,00 |
| Lactose monohydrate | 7,75 | 7,75 |
| Lait entier en poudre | 0,00 | 0,00 |
| Poudre de lactosérum | 4,50 | 4,50 |
| Assemblage 2 | 7,10 | 7,10 |
| Lécithine de soja | 0,60 | 0,60 |
| Total | 100,00 | 100,00 |

Les deux échantillons de chocolat au lait à teneur réduite en matières grasses réalisés avec l'assemblage ont été comparés avec le chocolat témoin à 32% matière grasse lors d'une dégustation à l'aveugle par un jury d'experts en analyse sensoriel de 25 personnes. Le test réalisé en aveugle, consistait à déguster les trois échantillons et à les décrire. La dégustation est une opération qui consiste à expérimenter, analyser et apprécier les caractères organoleptiques et plus particulièrement les caractères organo-olfactifs d'un produit. La dégustation fait appel aux sens visuel, tactile, olfactif et gustatif. Pour cette dégustation, les qualificatifs employés étaient identiques pour les trois chocolats :
- Test d'observation : surface du chocolat lisse, moirée et légèrement brillante ;
- Test tactile : surface lisse, dure.
- Test olfactif : odeur douce, fruitée, très agréable.
- Test gustatif : onctuosité, rondeur en bouche, crémeux.

Il n'y a donc eu aucun impact sur le remplacement des protéines de lait présentes dans le chocolat par un assemblage entre une protéine de pois et une protéine de lait obtenu selon l'invention.

Cela permet notamment l'obtention d'un chocolat présentant une teneur en matières grasses diminuée tout en n'impactant pas ses caractéristiques finales organoleptiques.

### Exemple 5: Utilisation des assemblages obtenus selon l'exemple 1 dans la préparation d'un yaourt brassé gras

Le but de cet essai est de remplacer une partie des protéines de lait traditionnellement utilisées (Promilk 852B) par l'assemblage 2 de l'exemple 1, en testant trois pourcentages de substitution : 25%, 50% et 75%.

### Formules

| | ***TEMOIN Promilk 852B 100%*** | ***Assemblage 2* 25%** | ***Assemblage 2 50%*** | ***Assemblage 2 75%*** |
|---|---|---|---|---|
| Lait écrémé liquide | 90.6 | 90.61 | 90.59 | 90.35 |
| Crème (42%) | 7.79 | 7.79 | 7.79 | 7.79 |
| Promilk 852B | 1.6 | 1.2 | 0.81 | 0.43 |
| Assemblage 2 | - | 0.4 | 0.81 | 1.23 |

| | | | | |
|---|---|---|---|---|
| *ES (%)* | *13.3* | *13.3* | *13.3* | *13.3* |
| MAT (%) | 4.5 | 4.5 | 4.5 | 4.5 |
| MG (%) | 3.5 | 3.5 | 3.5 | 3.5 |

| *Synérèse* | *Oui* | *Faible* | *Faible* | *Faible* |
|---|---|---|---|---|
| Asséchant, poudreux | RAS | RAS | RAS | RAS |
| Crémeux | + | + | ++ | ++ |

Cet exemple démontre qu'il est possible de substituer les protéines de lait par l'assemblage selon l'invention et ce pour les trois pourcentages de substitution testés. D'un point de vue sensoriel et organoleptiques, les trois yaourts testés ont été jugés comme très acceptables par rapport au yaourt témoin.

A partir d'un taux de substitution de 50%, les yaourts obtenus sont même notés comme étant plus crémeux, ce qui peut constituer un positionnement marketing intéressant.

On note également que le phénomène de synérèse est diminué dès lors qu'on utilise un assemblage dans la recette.

### Exemple 6: Utilisation des assemblages obtenus selon l'exemple 1 dans la préparation d'un fromage analogue

Le but de cet essai est de remplacer une partie des protéines de lait traditionnellement utilisées (Promilk 852B) par l'assemblage 2 de l'exemple 1, en testant trois pourcentages de substitution : 20%, 40% et 60% dans une recette de fromage analogue.

### Formules

| | ***TEMOIN Promilk 852B 100%*** | ***Assemblage 2 20%*** | ***Assemblage 2 40%*** | ***Assemblage 2 60%*** |
|---|---|---|---|---|
| Eau | 46.30% | 46.30% | 46.30% | 46.30% |
| MGLA | 25.00% | 25.00% | 25.00% | 25.00% |
| Sels de fonte | 1.80% | 1.80% | 1.80% | 1.80% |
| Promilk 852B | 25.00% | 20.00% | 15.00% | 10.00% |
| Assemblage 2 | - | 5.00% | 10.00% | 15.00% |
| Sel | 1.50% | 1.50% | 1.50% | 1.50% |
| Acide citrique | 0.40% | 0.60% | 0.60% | 0.60% |

| | | | | |
|---|---|---|---|---|
| ES (%) | 52.30% | 52.30% | 52.30% | 52.30% |
| MAT (%) | 20.20% | 20.20% | 20.20% | 20.20% |
| MG/ES | 48.20% | 48.20% | 48.20% | 48.20% |

| Production / sortie pétrin | Peu homogène, collant, exsudation de MG | Homogène, beige, exsudation de MG | Homogène, beige, exsudation de MG | Homogène, beige, exsudation de MG |
|---|---|---|---|---|
| pH sortie pétrin | 5.61 | 5.59 | 5.68 | 5.68 |

### Analyse sensorielle

| | ***TEMOIN Promilk 852B 100%*** | ***Assemblage 2 20%*** | ***Assemblage 2 40%*** | ***Assemblage 2 60%*** |
|---|---|---|---|---|
| **Promilk 852B** | 25.00% | 20.00% | 15.00% | 10.00% |
| **Assemblage 2** | - | 5.00% | 10.00% | 15.00% |
| **Aspect** | Ferme, plastique | Tranche (-) lisse, assez ferme | Perte légère de fermeté | Perte de fermeté supérieure, brillant & collant |
| **Dégustation** | | Note pois acceptable | Note pois acceptable | Note pois non acceptable |

Il est donc possible de substituer jusqu'à 40% des protéines de lait initialement présentes par un assemblage à 60/40 (protéines laitières/protéines végétales) dans une recette de fromage analogue sans impacter de façon significative sur les caractéristiques finales du produit.

### Exemple 7: Utilisation des assemblages obtenus selon l'exemple 1 dans la préparation d'un fromage frais sans séparation (FETA GDL)

Le but de cet essai est de remplacer une partie des protéines de lait traditionnellement utilisées (Promilk 852B) par l'assemblage 2 de l'exemple 1, en testant trois pourcentages de substitution : 25%, 50% et 75% dans une recette de fromage frais sans séparation, de type Féta à la GDL (gluconodeltalactone).

### Formules

| | ***TEMOIN Promilk 852B 100%*** | ***Assemblage* 2 *25%*** | ***Assemblage 2 50%*** | ***Assemblage 2 75%*** |
|---|---|---|---|---|
| Eau | 59.10% | 59.10% | 59.10% | 59.10% |
| MGV | 18.00% | 18.00% | 18.00% | 18.00% |
| SMP | 10.30% | 10.30% | 10.30% | 10.30% |
| Promilk 852B | 7.60% | 5.70% | 3.80% | 1.90% |
| Assemblage 2 | - | 1.90% | 3.80% | 5.70% |
| Sel | 2.00% | 2.00% | 2.00% | 2.00% |
| GDL | 3.00% | 3.00% | 3.00% | 3.00% |

| | | | | |
|---|---|---|---|---|
| ***ES (%)*** | ***18.20%*** | ***18.20%*** | ***18.10%*** | ***18.10%*** |
| **MAT (%)** | 9.60% | 9.60% | 9.50% | 9.40% |
| **MG/ES** | 45% | 45% | 45% | 45% |

### Analyse sensorielle

| ***Texture à la dégustation*** | *Cassant, ferme* | *Assez cassant, mais <100%* | *Assez cassant, + humide* /*F2,* | *Très tartinable, humide* |
|---|---|---|---|---|
| **Crémeux** | + | ++ | +++ | +++ |
| **Goût** | Acide, lactique | Acide | Note « pois » légère mais acceptable | Peu acide, goût « pois » assez marqué |
| **Référent marché** | Féta bloc | Féta bloc | Féta à tartiner | - |

Il est donc possible de substituer jusqu'à 50% des protéines de lait initialement présentes par un assemblage à 60/40 (protéines laitières/protéines végétales) dans une recette de fromage frais sans séparation sans impacter de façon significative sur les caractéristiques finales du produit.

### Exemple 8 : Utilisation de l'assemblage obtenu selon l'exemple 1 dans la préparation d'une crème dessert hyperprotéinée UHT

Le but de cet essai est de remplacer une partie des protéines habituellement utilisées dans ce type de formulations (Prodiet 87B) par les assemblages 2 et 3 de l'exemple 1.

En parallèle, un essai a également été réalisé en substituant les protéines habituellement utilisées par un simple mélange physique à sec entre une composition de protéines de pois et une composition de protéines de lait identiques à celles utilisées dans l'exemple 1 mais sans aucun traitement de modification de conformation.

### Formules

| | **Témoin** | **Assemblage 2** | **Assemblage 3** | **Mélange à sec PL/PV (ratio 60/40)** |
|---|---|---|---|---|
| **Eau** | 80.32% | 79.62% | 79.62% | 79.62% |
| **CREME UHT 30% MG** | 2.00% | 2.00% | 2.00% | 2.00% |
| **Chocolat rape** | 0.50% | 0.50% | 0.50% | 0.50% |
| **Cacao en poudre** | 2.50% | 2.50% | 2.50% | 2.50% |
| **Sel / Edulcorant** | 1.67% | 1.67% | 1.67% | 1.67% |
| **Hydrocolloides** | 1.80% | 1.80% | 1.80% | 1.80% |
| **sucralose** | 0.010% | 0.010% | 0.010% | 0.010% |
| **Prodiet 87B low calcium** | 11.2% | | | |
| **Assemblage 2** | | 11.9% | | |
| **Assemblage 3** | | | 11.9% | |
| **Mélange à sec PL/PV** | | | | 11.9% |

Les crèmes obtenues ont été dégustées à l'aveugle par un jury entrainé de 25 personnes. Celles réalisées avec les assemblages ont été jugés identiques au témoin et satisfaisantes en terme de texture en bouche, de crémeux, d'onctuosité.

Par contre, la crème réalisée avec le simple mélange à sec a été jugée inacceptable car elle ne présentait pas la texture crémeuse attendue pour ce genre de produit.

Ainsi, le fait d'utiliser un assemblage ayant subi un traitement de modification de conformation des protéines permet d'obtenir des caractéristiques technologiques que ne possède pas le simple mélange physique des deux compositions de protéines.

### Exemple 9 : Utilisation de l'assemblage obtenu selon l'exemple 1 dans la préparation d'une mousse laitière

Le but de cet essai est de remplacer la totalité du référent laitier traditionnellement utilisé dans une recette de mousse laitière par l'assemblage 2 de l'exemple 1.

### Formules

| | **Témoin** | **Assemblage 2** |
|---|---|---|
| Eau | 62.20% | 62.20% |
| MGV | 8.90% | 8.90% |
| Sucre | 11.20% | 11.20% |
| Cacao poudre + chocolat | 7.00% | 7.00% |
| Systèmes texturants + laitier | 9.77% | 9.77% |
| **Référent laitier** | **0.93%** | - |
| **Assemblage 2** | - | **0.93%** |

| | | |
|---|---|---|
| Viscosité avant foison^{t} (mPa.s-1, R7 20 rpm) | 74000 | 96400 |
| Overrun (%) | 127 | 127 |

Cet exemple illustre qu'il est possible de fabriquer des mousses laitières avec un assemblage de protéines contenant des protéines de pois et des protéines de lait. Le procédé de fabrication des dites mousses n'est pas impacté par l'utilisation de cet assemblage dans la formulation.

Le produit présent un excellent foisonnement et la texture finale du produit a été jugée identique à celle du témoin.

Ainsi l'intérêt des assemblages selon l'invention et leur rôle comme agent texturant, et plus particulièrement foisonnant est parfaitement démontré ici.

### Exemple 10 : Utilisation de l'assemblage obtenu selon l'exemple 1 dans la préparation de crème glacée

Le but de cet essai est de remplacer une partie des protéines de lait habituellement utilisées dans la formulation d'une crème glacée par l'assemblage 2 de l'exemple 1.

### Formules

| Ingrédients | **Témoin** | **Assemblage 2** |
|---|---|---|
| Eau | 48,9 | 49,2 |
| Crème fraîche (36 % MG) | 25,0 | 25,0 |
| Saccharose | 12,0 | 14,0 |
| Lait écrémé en poudre | 5,0 | 1,0 |
| Assemblage 2 | 0,0 | 1,7 |
| Poudre de lactosérum | 4,0 | 4,0 |
| Sirop de glucose | 4,0 | 4,0 |
| Stabilisant | 0,6 | 0,6 |
| Arôme vanille IFF | 0,5 | 0,5 |
| Arôme masquant | 0,0 | Qs |
| | 100,0 | 100,0 |

### Analyse des crèmes glacées obtenues

| Valeurs nutritionnelles pour 100 g | **Témoin** | **Assemblage 2** |
|---|---|---|
| Energie (Kcal) | 181,0 | 180,0 |
| Protéines (g) | 3,0 | 3,0 |
| Glucides (g) | 22,2 | 21,6 |
| Dont sucres (g) | 21,1 | 20,8 |
| Lipides (g) | 9,1 | 9,0 |
| M.S. | 34,8 | 35,5 |

Les deux échantillons de crèmes glacée ont été goutés en aveugle par un jury d'experts en analyse sensoriel de 25 personnes.

Le premier test consistait en un test triangulaire où sur les trois échantillons proposés deux étaient identiques.

78% des personnes ayant participés au test n'ont pas pu reconnaître quels étaient les deux échantillons identiques. Aucun des échantillons testés n'a reçu une préférence significative au niveau du jury.

Le second test, toujours réalisé en aveugle, consistait à déguster les deux échantillons et à les décrire. La dégustation est une opération qui consiste à expérimenter, analyser et apprécier les caractères organoleptiques et plus particulièrement les caractères organo-olfactifs d'un produit. La dégustation fait appel aux sens visuel, olfactif et gustatif. Pour cette dégustation, les qualificatifs employés étaient identiques pour les deux crèmes glacées:
- Test d'observation : surface de la crème glacée lisse,
- Test olfactif : odeur douce, lactée, vanillée, très agréable.
- Test gustatif : onctuosité, rondeur en bouche, crémeux.

Aucune différence ni en terme de texture, ni en terme de goût n'a pu être mise en évidence entre les deux crèmes glacées.

### Exemple 11 : Utilisation de l'assemblage obtenu selon l'exemple 1 dans la préparation d'une soupe instantanée riche en protéines

Le but de cet essai est de réaliser une préparation pour une soupe instantanée riche en protéines en utilisant l'assemblage 2 de l'exemple 1. Le témoin a quant à lui été réalisé en utilisant un simple mélange physique à sec entre une composition de protéines de pois et une composition de protéines de lait identiques à celles utilisées dans l'exemple 1 mais sans aucun traitement de modification de conformation.

### Formules

| | **Mélange à sec** | **Assemblage 2** |
|---|---|---|
| Poudre de champignons | 20,0 | 20,0 |
| Mélange à sec | 30,0 | 0,0 |
| Sirop de glucose | 13,7 | 13,7 |
| Assemblage 2 | 0 | 30,0 |
| Soup creamer(huile de palme raffinée, lactose, caséinate) | 10,0 | 10,0 |
| Amidon de pomme de terre modifié | 9,4 | 9,4 |
| Protéine de blé soluble | 3,75 | 3,75 |
| Sel | 2,5 | 2,5 |
| Oignon blanc poudre | 3,0 | 3,0 |
| Glutamate monosodique | 2,8 | 2,8 |
| Sucre | 2,2 | 2,2 |
| Champignons en morceaux, | 1,0 | 1,0 |
| Huile de tournesol | 1,0 | 1,0 |
| Feuilles de persil | 0,25 | 0,25 |
| Arôme champignon de Paris | 0,2 | 0,2 |
| Arôme champignon des bois | 0,1 | 0,1 |
| Poivre blanc | 0,1 | 0,1 |
| Total (%) | 100,0 | 100,0 |

Disperser l'huile de tournesol avec le sel, le sucre, le glutamate monosodique. Ajouter les autres poudres. Mélanger.
Reconstitution de la soupe
Pour une portion de 300 g : Ajouter 250 ml d'eau bouillante au sachet de 50g.
Servir immédiatement.

Au niveau de la reconstitution des soupes, il a été observé une meilleure dispersion de l'assemblage 2 que du simple mélange physique des deux poudres.

De plus, avec l'assemblage 2, la texture de la soupe a été jugée plus lisse, plus crémeuse, plus aérée que pour la soupe témoin par un jury entrainé de 25 personnes. Au niveau de la couleur également, la soupe préparée avec l'assemblage 2 a été jugée plus blanche et plus agréable que la couleur de la soupe témoin.

Ainsi, le fait d'utiliser un assemblage ayant subi un traitement de modification de conformation des protéines permet d'obtenir des caractéristiques technologiques que ne possède pas le simple mélange physique des deux compositions de protéines.

## Revendications

1. Procédé de préparation d'un assemblage d'au moins un rétentat de caséine micellaire et d'au moins une protéine de pois, ledit procédé comprenant les étapes consistant à :
- préparer une composition aqueuse comprenant au moins une protéine de pois par incorporation de ladite au moins une protéine de pois dans de l'eau ;
- abaisser le pH de ladite composition aqueuse à une valeur inférieure ou égale à 4,5 pour obtenir une composition acidifiée ;
- remonter le pH de ladite composition aqueuse acidifiée à une valeur comprise entre 5 et 8, de préférence entre 5,5 et 7,5, plus préférentiellement encore jusqu'à une valeur comprise entre 6 et 7, et idéalement à une valeur de 7 ;
- introduire le rétentat de caséines micellaires dans ladite composition aqueuse obtenue après remontée du pH pour obtenir un mélange ;
- homogénéiser le mélange obtenu.

2. Procédé selon la revendication 1, **caractérisé en ce que** le ratio pondéral de la protéine de pois au rétentat de caséines micellaires est compris entre 20 :80 et 45 :55.

3. Procédé selon la revendication 2, **caractérisé en ce que** le ratio pondéral de la protéine de pois au rétentat de caséines micellaires est de 40 :60

4. Procédé selon l'une quelconque des revendications 1 à 3, **caractérisé en ce que** la teneur totale en protéines de l'assemblage est comprise entre 20 et 100% en poids de produit sec, de préférence entre 30% et 90% et plus préférentiellement encore entre 35% et 85%.

5. Procédé selon la revendication 4, **caractérisé en ce que** la teneur totale en protéines de l'assemblage est comprise entre 40% et 80% en poids de produit sec.

6. Assemblage d'un rétentat de caséines micellaires et d'au moins une protéine de pois susceptible d'être obtenue par le procédé selon l'une quelconque des revendications 1 à 5.

7. Utilisation de l'assemblage selon la revendication 6 en tant qu'agent fonctionnel, et de préférence en tant qu'agent émulsifiant, agent moussant, agent gélifiant, agent viscosant, agent foisonnant, agent rétenteur d'eau, agent filmogène et/ou adhésif, agent ayant un pouvoir dans les réactions de Maillard, agent modifiant les propriétés sensorielles des matrices alimentaires dans lesquelles il est utilisé.

8. Utilisation de l'assemblage selon la revendication 6 pour la préparation d'une composition alimentaire.

9. Utilisation selon la revendication 8, **caractérisée en ce que** la composition alimentaire est choisie dans le groupe constitué par les boissons, les produits laitiers, les confiseries, les desserts lactés, les préparations destinées à la nutrition clinique et/ou à des individus souffrant de dénutrition, les préparations destinées à la nutrition infantile, les mélanges de poudres destinés à des produits de régime, ou pour sportifs, les produits hyperprotéinés pour la nutrition diététique, les soupes, sauces, et aides culinaires, les confiseries, les produits à base de viande, les produits à base de poissons, les produits céréaliers comme le pain, les pâtes, biscuits, pâtisseries, céréales et barres de céréales, les produits végétariens et plats cuisinés, les agents blanchissants tels les coffee whiteners, les produits destinés à l'alimentation animale.

10. Utilisation selon la revendication 9, **caractérisée en ce que** la composition alimentaire est choisie dans le groupe constitué par les produits laitiers.

11. Utilisation selon la revendication 10, **caractérisée en ce que** le produit laitier est choisi dans le groupe constitué par les fromages frais et affinés, les fromages tartinables, les laits fermentés, les smoothies au lait, les yaourts, les spécialités laitières et les glaces fabriquées à partir de lait.

12. Utilisation selon la revendication 9, **caractérisée en ce que** la composition alimentaire est du chocolat.

13. Utilisation selon l'une quelconque des revendications 8 à 12, **caractérisée en ce que** la composition alimentaire est réduite en matière grasse.

14. Utilisation selon l'une quelconque des revendications 8 à 12, **caractérisé en ce que** la composition alimentaire est enrichie en protéines.

## Patentansprüche

1. Verfahren zur Herstellung einer Mischung aus mindestens einem Retentat mizellaren Caseins und mindestens einem Erbsenprotein, wobei das Verfahren die folgenden Schritte umfasst:
- Herstellen einer wässrigen Zusammensetzung, die mindestens ein Erbsenprotein enthält, durch Einbringen des mindestens einen Erbsenproteins in Wasser;
- Absenken des pH-Werts der wässrigen Zusammensetzung auf einen Wert von 4,5 oder weniger, um eine angesäuerte Zusammensetzung zu erhalten;
- Anheben des pH-Werts der angesäuerten wässrigen Zusammensetzung auf einen Wert zwischen 5 und 8, vorzugsweise zwischen 5,5 und 7,5, noch bevorzugter bis zu einem Wert zwischen 6 und 7 und idealerweise auf einen Wert von 7;
- Einbringen des Retentats mizellaren Caseins in die nach dem Anheben des pH-Werts erhaltene wässrige Zusammensetzung, um eine Mischung zu erhalten;
- Homogenisieren der erhaltenen Mischung.

2. Verfahren nach Anspruch 1, **dadurch gekennzeichnet, dass** das Gewichtsverhältnis von Erbsenprotein zu Retentat mizellaren Caseins im Bereich von 20:80 bis 45:55 liegt.

3. Verfahren nach Anspruch 2, **dadurch gekennzeichnet, dass** das Gewichtsverhältnis von Erbsenprotein zu Retentat mizellaren Caseins 40:60 beträgt.

4. Verfahren nach einem der Ansprüche 1 bis 3, **dadurch gekennzeichnet, dass** der Gesamtproteingehalt der Mischung zwischen 20 und 100 Gew.-% des Trockenprodukts liegt, vorzugsweise zwischen 30% und 90% und noch bevorzugter zwischen 35% und 85%.

5. Verfahren nach Anspruch 4, **dadurch gekennzeichnet, dass** der Gesamtproteingehalt der Mischung zwischen 40 und 80 Gew.-% des Trockenprodukts liegt.

6. Mischung eines Retentats mizellaren Caseins und mindestens eines Erbsenproteins, das durch das Verfahren nach einem der Ansprüche 1 bis 5 erhalten werden kann.

7. Verwendung der Mischung nach Anspruch 6 als funktionelles Mittel, vorzugsweise als Emulgator, Schaumbildner, Geliermittel, Viskositätsmittel, Treibmittel, Wasserretentionsmittel, filmbildendes Mittel und/oder Haftmittel, Mittel mit einer Wirkung bei Maillard-Reaktionen, Mittel, das die sensorischen Eigenschaften der Lebensmittelmatrizen, in denen es verwendet wird, verändert.

8. Verwendung der Mischung nach Anspruch 6 zur Herstellung einer Lebensmittelzusammensetzung.

9. Verwendung nach Anspruch 8, **dadurch gekennzeichnet, dass** die Lebensmittelzusammensetzung aus der Gruppe ausgewählt ist, die aus Getränken, Milchprodukten, Süßwaren, Milchdesserts, Präparaten für die klinische Ernährung und/oder für Personen mit Unterernährung, Präparaten für die Säuglingsernährung, Pulvermischungen für Diät- oder Sportprodukte, eiweißreichen Produkte für die diätetische Ernährung, Suppen, Saucen und Küchenhilfen, Süßwaren, Fleischerzeugnissen, Fischprodukten, Getreideprodukten wie Brot, Nudeln, Kekse, Gebäck, Cerealien und Müsliriegel, vegetarischen Produkte und Fertiggerichten, Bleichmitteln wie Coffee Whiteners und Produkten für die Tierernährung besteht.

10. Verwendung nach Anspruch 9, **dadurch gekennzeichnet, dass** die Lebensmittelzusammensetzung aus der Gruppe ausgewählt ist, die aus Milchprodukten besteht.

11. Verwendung nach Anspruch 10, **dadurch gekennzeichnet, dass** das Milchprodukt aus der Gruppe ausgewählt ist, die aus frischem und gereiftem Käse, streichfähigem Käse, fermentierter Milch, Milch-Smoothies, Joghurt, Milchspezialitäten und aus Milch hergestelltem Eis besteht.

12. Verwendung nach Anspruch 9, **dadurch gekennzeichnet, dass** es sich bei der Lebensmittelzusammensetzung um Schokolade handelt.

13. Verwendung nach einem der Ansprüche 8 bis 12, **dadurch gekennzeichnet, dass** die Lebensmittelzusammensetzung fettreduziert ist.

14. Verwendung nach einem der Ansprüche 8 bis 12, **dadurch gekennzeichnet, dass** die Lebensmittelzusammensetzung mit Protein angereichert ist.

## Claims

1. A process for producing an assembly of at least one micellar casein retentate and at least one pea protein, said process comprising the steps consisting in:
- preparing an aqueous composition comprising at least one pea protein by incorporating said at least one pea protein into water;
- reducing the pH of said aqueous composition to a value of less than or equal to 4.5, in order to obtain an acidified composition;
- raising the pH of said acidified aqueous composition to a value of between 5 and 8, preferably between 5.5 and 7.5, even more preferentially to a value of between 6 and 7, and ideally to a value of 7;
- introducing at least one micellar casein retentate into said aqueous composition obtained after the pH has been raised, in order to obtain a mixture;
- homogenizing the mixture obtained.

2. The process as claimed in claim 1, **characterized in that** the weight ratio of the pea protein to the micellar casein retentate is between 20:80 and 45:55.

3. The process as claimed in claim 2, **characterized in that** the weight ratio of the pea protein to the micellar casein retentate is 40:60.

4. The process as claimed in any one of claims 1 to 3, **characterized in that** the total content of proteins of the assembly is between 20% and 100% by weight of dry product, preferably between 30% and 90% and even more preferentially between 35% and 85%.

5. The process as claimed in claim 4, **characterized in that** the total content of proteins of the assembly is between 40% and 80% by weight of dry product.

6. An assembly of at least one micellar casein retentate and of at least one pea protein, which can be obtained by means of the process as claimed in any one of claims 1 to 5.

7. The use of the assembly as claimed in claim 6 as a functional agent, and preferably as an emulsifying agent, foaming agent, gelling agent, viscosifying agent, overrun agent, water-retaining agent, film-forming and/or adhesive agent, agent having a capacity in Maillard reactions, and an agent for modifying the sensory properties of the food matrices in which it is used.

8. The use of the assembly as claimed in claim 6 for the preparation of a food composition.

9. The use as claimed in claim 8, **characterized in that** the food composition is chosen from the group consisting of beverages, milk products, confectionery products, milk desserts, preparations intended for clinical nutrition and/or for individuals suffering from undernourishment, preparations intended for infant nutrition, mixtures of powders intended for diet products or for sportspersons, high-protein products for dietetic nutrition, soups, sauces and culinary aids, confectionery products, meat-based products, fish-based products, cereal products such as bread, pasta, cookies, pastries, cereals and cereal bars, vegetarian products and ready meals, whitening agents such as coffee whiteners, products intended for feeding animals.

10. The use as claimed in claim 9, **characterized in that** the food composition is chosen from the group consisting of milk products.

11. The use as claimed in claim 10, **characterized in that** the milk product is chosen from the group consisting of fromage frais and ripened cheeses, cheese spreads, fermented milks, milk smoothies, yoghurts, speciality milk products and ice creams produced from milk.

12. The use as claimed in claim 9, **characterized in that** the food composition is chocolate.

13. The use as claimed in any one of claims 9 to 12, **characterized in that** the food composition is a low-fat food composition.

14. The use as claimed in any one of claims 8 to 12, **characterized in that** the food composition is enriched with proteins.
